# EUROPÄISCHE PATENTSCHRIFT

(11) **EP 2 347 920 B1**
(45) Veröffentlichungstag und Bekanntmachung des Hinweises auf die Patenterteilung: **28.09.2016**
(21) Anmeldenummer: 10000569.3
(22) Anmeldetag: 21.01.2010
(51) Int. Cl.: B60H 1/00

(54) **Träger für ein Innenverkleidungsbauteil sowie ein Verfahren zu seiner Herstellung**
Holder for an internal cladding component and method for its production
Support pour un composant de revêtement interne ainsi que son procédé de fabrication

(43) Veröffentlichungstag der Anmeldung: 27.07.2011
(73) Patentinhaber: SMP Deutschland GmbH, 79268 Bötzingen (DE)
(72) Erfinder: Duri, Manfred, 85661 Forstinning (DE)
(74) Vertreter: Westphal, Mussgnug & Partner Patentanwälte mbB

(56) Entgegenhaltungen:
- EP-A2- 1 415 897
- DE-A1- 10 061 430
- DE-A1- 10 337 605
- DE-A1-102005 061 506
- DE-A1-102007 007 387
- DE-A1-102007 062 898
- DE-B4-102005 001 201
- DE-T2- 60 123 455
- US-B1- 6 685 262

## Beschreibung

Die vorliegende Erfindung betrifft einen Träger aus einem thermoplastischen Kunststoff für ein Innenverkleidungsbauteil für Kraftfahrzeuge, insbesondere für eine Instrumententafel, wie er beispielsweise aus der DE 10 2007 007 387 A1, EP 1415897 oder der DE 10 2005 001 201 B1 bekannt ist und von dem die Erfindung ausgeht sowie ein Verfahren zu seiner Herstellung.

Träger für Instrumententafeln mit integrierten Luftführungen werden üblicherweise so gefertigt, dass die Luftführungen separat als Module gefertigt und anschließend mit dem Träger für die Instrumententafel verschweißt werden. Derartige Luftkanalanordnungen für Armaturentafeln sind in der DE 10 2005 001 201 B4, der DE 103 37 605 A1 sowie der DE 601 23 455 T2 beschrieben. Diese konventionellen Anordnungen haben die Nachteile, dass bspw. der Bauraum nicht optimal genutzt wird, zusätzlicher Materialeinsatz erforderlich ist und sie meistens ein relativ hohes Gewicht aufweisen. Außerdem ist stets ein zusätzlicher Prozessschritt erforderlich, um das separate Modul mit der Instrumententafel zu verbinden.

Weiterentwickelte Instrumententafeln mit integrierten Luftführungen sind in der DE 100 61 430 A1 und der DE 10 2007 062 898 A1 beschrieben.

Gegenstand der DE 100 61 430 A1 ist eine fluiddurchströmte Innenraumverkleidung für eine Fahrzeugkarosserie, die in ihrem durchströmten Bereich als ein Abstandsgewirk ausgebildet ist. Der Nachteil dieser Anordnung besteht darin, dass auf diese Weise nur schwierig eine kontrollierte und gezielte Strömung des Kühl- bzw. Wärmemediums erreicht werden kann und die Konstruktion des Innenverkleidungsbauteils recht aufwändig ist.

In der DE 10 2007 062 898 A1 wird ein mehrschichtig aufgebautes Innenverkleidungsbauteil für Kraftfahrzeuge beschrieben, das aus einer Dekorschicht, einem Träger und einer dazwischen angeordneten Schaumschicht besteht, in der Kühlschläuche eingeschäumt sind, mit deren Hilfe die Instrumententafel selber gekühlt bzw. temperiert werden soll. Zur Temperierung des Fahrzeuginnenraums ist das Volumen der Kühlschläuche, deren Durchmesser durch die Dicke der Instrumententafel selber limitiert ist, nicht vorgesehen.

Aufgabe der vorliegenden Erfindung ist es somit, ein Verfahren zur Herstellung eines Trägers für eine Instrumententafel mit einer Luftführung für die Klimatisierung des Fahrzeuginnenraums anzubieten, der die Nachteile des Standes der Technik nicht aufweist.

Gelöst wird die Aufgabe durch ein Verfahren mit den Merkmalen des Anspruchs 1. Vorteilhafte Weiterentwicklungen und Ausgestaltungen der erfindungsgemäßen Trägers sind Gegenstand der entsprechenden Unteransprüche.

Im Rahmen der Arbeiten für die vorliegende Erfindung wurde gefunden, dass mit Hilfe eines Innenverkleidungsbauteils, das aus einem Träger mit einer Matrix aus einem thermoplastischen Kunststoff und einem in die Matrix eingebetteten Hohlprofil aus einem faserverstärkten Kunststoff, unter optimaler Bauraumausnutzung eine Instrumententafel mit integrierter Luftführung erhalten werden kann, die gegenüber den konventionellen Bauteilen, bei denen häufig Luftführungen aus Metall eingesetzt werden, zusätzlich den Vorteil eines reduzierten Gewichts aufweist.

Als Trägermaterial wird ein thermoplastischer Kunststoff aus der Gruppe Polypropylen (PP), Polyethylen (PE), Polybutylenterephthalat (PBT), Polyamid (PA), Polystyrol (PS), Polycarbonat (PC), Polymethylmetacrylat (PMMA), Acrylnitrilbutadienstyrol (ABS), Acrylnitrilbutadienstyrol-Polycarbonat-copolymerisat (ABS-PC) oder Polyoxymethylen eingesetzt.

Für das faserverstärkte Kunststoffhohlprofil kann ein thermoplastischer Kunststoff ausgewählt aus der Gruppe Polypropylen (PP), Polyamid (PA), Polyetheretherketon (PEEK), Polyethersulfon (PES), Polyetherimid (PEI), Polyphenylensulfit (PPS) oder Polysulfon (PSU) eingesetzt werden.

Die Verstärkungsfasern sind vorzugsweise ausgewählt aus der Gruppe Glasfasern, Karbonfasern, organische Fasern oder Keramikfasern.

Das geschlossene Hohlprofil aus dem faserverstärkten Kunststoff wird vorzugsweise über eine Extrusion von unidirektionalen Faserbändern und deren Verarbeitung in einem kombinierten Wickel- und Heizwerkzeug zu einem Rohrhalbzeug, das anschließend zum fertigen geschlossenen Hohlprofil umgeformt wird, hergestellt. Das Umformen erfolgt in einem Umformwerkzeug bei ca. 60°C, wobei wahlweise der Querschnitt des Hohlprofils und/oder die Orientierung des Hohlprofils in der Längsrichtung verändert und den gewünschten Bedingungen bzw. der Struktur der Instrumententafel angepasst werden kann. So können bei diesem Schritt bspw. lokale Querschnittsreduzierungen durch gezieltes Einfalten des Hohlprofils im Querschnitt ermöglicht werden.

Das faserverstärkte Hohlprofil lässt sich durch Variation von Fasermaterial, Fasergehalt und Faserorientierung optimal an die jeweiligen Steifigkeitsanforderungen für das Bauteil anpassen. Prinzipiell können sämtliche üblichen anorganischen und organischen Verstärkungsfasern eingesetzt werden. So können auf Seiten der anorganischen Fasern neben den üblichen Glasfasern oder Keramikfasern auch Basaltfasern, Borfasern oder Kieselsäurefasern eingesetzt werden, während auf der organischen Seite Aramidfasern, Kohlenstofffasern, Polyesterfasern, Nylonfasern und Polyethylenfasern als mögliche Fasern zu nennen sind.

Zur Herstellung des Rohrhalbzeugs, aus dem durch thermisches Umformen das fertige Profil hergestellt wird, werden vorzugsweise mit thermoplastischem Kunststoff imprägnierte, unidirektionale Faserbänder eingesetzt, die beispielsweise über eine Extrusion eines thermoplastischen Kunststoffes in einem Schneckenextruder mit einer Breitschlitzdüse gewonnen werden, wobei während der Extrusion der thermoplastische Kunststoff mit den Fasern oder mit Faserbündeln den sogenannten Faserrovings versetzt wird. Durch Aufwickeln mehrerer unidirektionaler Faserbänder auf einen Wickeldorn, anschließendes Heizen der aufgewickelten Faserbänder und einem abschließenden Press- und Kühlschritt kann das Rohrhalbzeug gewonnen werden, das in einem Umformwerkzeug dann in die gewünschte Form gebracht wird.

Gegenstand der vorliegenden Erfindung ist auch die Herstellung eines Trägers für ein Innenverkleidungsbauteil mit einer Matrix aus einem thermoplastischen Kunststoff mit einer integrierten Luftführung, wobei ein geschlossenes Hohlprofil aus einem faserverstärkten Kunststoff in einer Spritzgießmaschine mit der Matrix aus dem thermoplastischen Kunststoff umspritzt wird.

Eine vorteilhafte Variante des Verfahrens sieht vor, dass die Spritzgießmaschine mit einer Gasinnendrucktechnik kombiniert ist, wobei mit Hilfe der Gasinnendrucktechnik während des Umspritzens des geschlossenen Hohlprofils im Innern des Hohlprofils ein dem im Spritzgießwerkzeug herrschenden Innendruck entgegengesetzter Druck erzeugt wird. Auf diese Weise ist nur eine geringe Radialversteifung zur Stabilisierung des Hohlprofils erforderlich, da die Gasinnendrucktechnik das Kollabieren des Hohlprofils verhindert.

Die besonderen Vorteile des vorliegenden Verfahrens und Bauteils sind darin zu sehen, dass ein geschlossenes Faserverbundprofil optimal hinsichtlich Steifigkeit und Gewicht abgestimmt werden kann. Darüber hinaus erlaubt die Verwendung einer thermoplastischen Matrix die geometrische Anpassung durch einen dreidimensionalen Umformprozess an das herzustellende Innenverkleidungsbauteil bzw. den dazu einzusetzenden Träger. Durch das Umspritzen des Profils wird ein großflächiger form- und materialschlüssiger Verbund erreicht, wodurch eine optimale Kraftübertragung gewährleistet ist. Durch die optional einzusetzende Gasinnendrucktechnik, mit der im Innern des Profils ein dem im Spritzgießwerkzeug herrschender Innendruck entsprechender Gegendruck erzeugt wird, kann zusätzlich ein Verformen des Steifungsprofils verhindert werden, sodass die Faserorientierung nur auf die im Gebrauchsfall auftretende Belastung ausgelegt werden muss, wodurch eine zusätzliche Gewichtsreduzierung erreicht werden kann.

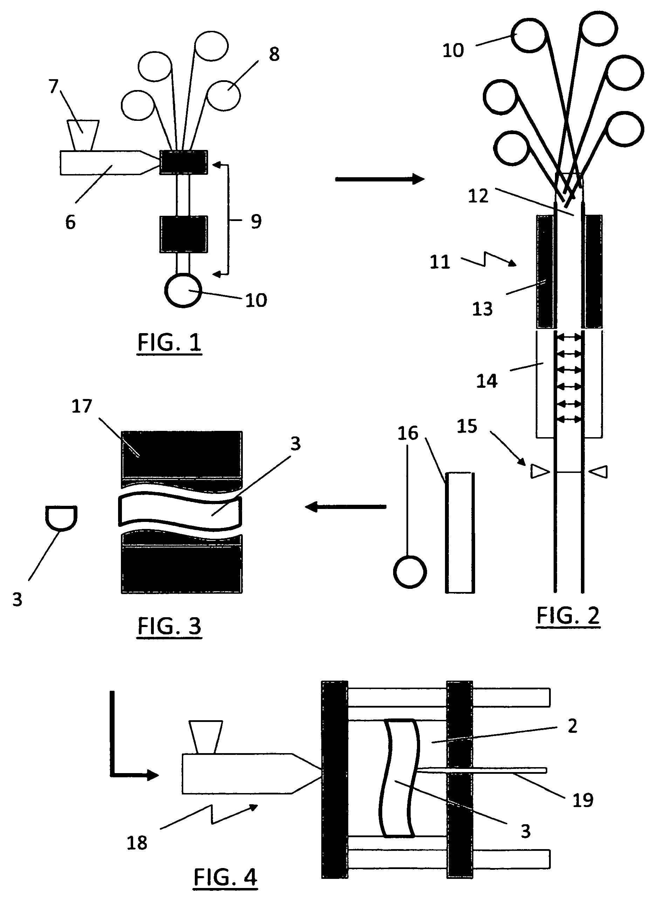

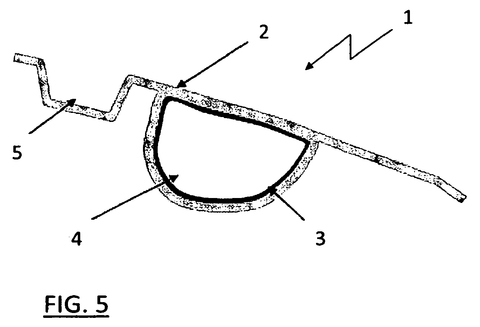

Im Folgenden wird die vorliegende Erfindung anhand von Zeichnungen ausführlich erläutert. Dabei zeigen die Figuren 1 bis 4 eine schematische Darstellung der einzelnen Verfahrensschritte bei der Herstellung des erfindungsgemäßen Trägers und Figur 5 eine Schnittdarstellung des Trägers.

Die Figur 1 zeigt den ersten Verfahrensschritt, bei dem ein thermoplastischer Kunststoff mit Hilfe eines Extruders 6 und einer Abzugs-, Imprägnier- und Aufwickelvorrichtung 9 zu unidirektionalen Faserbändern 10 verarbeitet wird. Dabei wird zunächst über einen Trichter 7 ein thermoplastischer Kunststoff, wie z. B. Polypropylen, Polyamid und Polyetheretherketon, in Form von Pellets in einen Schneckenextruder mit einer Breitschlitzdüse gegeben und dort verarbeitet, wobei das Extrudat vor dem Passieren einer Abzugs-, Imprägnier- und Aufwickelvorrichtung 9 mit Fasern 8, z. B. in Form von Faserrovings, Glasfasern oder Kohlefasern, versetzt wird. Als Zwischenprodukt wird ein unidirektionales Faserband 10 mit einer Dicke zwischen 0.1 mm und 2 mm sowie einer Breite zwischen 10 mm und 60 mm erhalten.

In der Figur 2 ist der zweite Verfahrensschritt dargestellt, bei dem die unidirektionalen Faserbänder 10 zu einem Rohrhalbzeug 16 verarbeitet werden. Dazu werden mehrere Faserbänder 10 über einen Wickeldorn 12 zu einem Rohr aufgewickelt, das anschließend die Heizzone 13 sowie die Press- und Kühlzone 14 eines kombinierten Wickel- und Heizwerkzeugs 11 durchläuft. Nach dem Abkühlen kann das Rohrhalbzeug 16, das noch einen kreisförmigen Querschnitt aufweist, mit einem Schneidwerkzeug 15 abgetrennt werden. Die Heiztemperaturen in dem kombinierten Wickel- und Heizwerkzeug 11 hängen vom eingesetzten thermoplastischen Kunststoff ab und liegen üblicherweise zwischen 150°C und 300°C.

In der Figur 3 ist der Umformschritt schematisch dargestellt, bei dem der Formrohling 16 in einem Umformwerkzeug 17 zu dem gewünschten Hohlprofil 3 mit einem geschlossenen Querschnitt umgeformt wird. Die Umformung erfolgt bspw. bei Temperaturen von ca. 60°C. Wie aus der Figur 3 ersichtlich ist, wird bei der Umformung nicht nur die Richtung des Profils, sondern auch der Querschnitt des Profils verändert. Dabei können bspw. auch lokale Querschnittsreduzierungen durch gezieltes Einfalten des Profils vorgesehen sein.

Der letzte Verfahrensschritt ist in der Figur 4 dargestellt, bei dem das fertige Höhlprofil 3 in einer Spritzgießmaschine 18 in eine Matrix 2 aus thermoplastischem Kunststoff eingebettet wird. Dabei kann optional auch eine Gasinnendrucktechnik 20 eingesetzt werden, wobei während des Umspritzens des geschlossenen Hohlprofils 3 im Innern des Profils ein dem im Spritzgießwerkzeug 19 herrschenden Innendruck entgegengesetzter Druck erzeugt wird, sodass nur eine geringe Radialversteifung für die Stabilisierung des Hohlprofils 3 erforderlich ist. Auf diese Weise kann die Faserverstärkung entsprechend den Steifigkeitsanforderungen für das Formteil bzw. für den Träger optimiert werden.

In der Abbildung 5 ist der fertige Träger 1 im Querschnitt dargestellt. Dabei ist die Matrix 2 aus thermoplastischem Kunststoff zu erkennen, in die ein geschlossenes Hohlprofil 3 aus einem faserverstärkten Kunststoff eingebettet ist. Bei dem in der Figur 5 dargestellten Formteil handelt es sich um einen Träger 1 für eine Instrumententafel, in den eine Luftführung 4 integriert ist. Mit dem Bezugszeichen 5 ist der sogenannte Defrost-Kanal zu erkennen, über den die Belüftung der Frontscheibe erfolgt.

### Bezugszeichenliste

- 1: Träger
- 2: Matrix aus thermoplastischem Kunststoff
- 3: Hohlprofil
- 4: Luftführung
- 5: Defrost-Kanal
- 6: Extruder
- 7: Trichter
- 8: Fasern
- 9: Abzugs-, Imprägnier- und Aufwickelvorrichtung
- 10: Faserband
- 11: Kombiniertes Wickel- und Heizwerkzeug
- 12: Wickeldorn
- 13: Heizzone
- 14: Kühl- und Presszone
- 15: Schneidwerkzeug
- 16: Rohrhalbzeug
- 17: Umformwerkzeug
- 18: Spritzgießmaschine
- 19: Formwerkzeug
- 20: Gasinnendrucktechnik

## Patentansprüche

1. Verfahren zur Herstellung eines Trägers (1) eines Innenverkleidungsbauteils eines Kraftfahrzeugs, insbesondere für eine Instrumententafel, mit einer Matrix (2) aus einem thermoplastischen Kunststoff, wobei in die Matrix (2) aus dem thermoplastischen Kunststoff ein Hohlprofil (3) mit einem geschlossenen Querschnitt aus einem faserverstärkten Kunststoff eingebettet ist, wobei der Träger (1) aus einem thermoplastischen Kunststoff aus der Gruppe Polypropylen (PP), Polyethylen (PE), Polybutylenterephthalat (PBT), Polyamid (PA), Polystyrol (PS), Polycarbonat (PC), Polymethylmethacrylat (PMMA), Acrylnitril-Butadien-Styrol (ABS), Acrylnitril-Butadien-Styrol / Polycarbonat Copolymerisat (ABS-PC) oder Polyoxymethylen (POM) besteht, mit dem das geschlossene Hohlprofil (3) aus dem faserverstärkten Kunststoff umspritzt ist,
**dadurch gekennzeichnet, dass**
das für den Träger eingesetzte geschlossene Hohlprofil (3) aus dem faserverstärkten Kunststoff hergestellt ist über die Schritte
- Extrusion von unidirektionalen Faserbändern (10),
- Verarbeitung der Faserbänder (10) in einem kombinierten Wickel- und Heizwerkzeug (11) zu einem Rohrhalbzeug (16) und
- Umformen des Rohrhalbzeugs (16) zum geschlossenen Hohlprofil (3).

2. Verfahren nach Anspruch 1,
**dadurch gekennzeichnet, dass**
das Hohlprofil (3) als Luftführung (4) vorgesehen ist.

3. Verfahren nach Anspruch 1 oder 2,
**dadurch gekennzeichnet, dass**
der faserverstärkte Kunststoff für das geschlossene Hohlprofil (3) ein thermoplastischer Kunststoff, ausgewählt aus der Gruppe Polypropylen (PP), Polyamid (PA), Polyetheretherketon (PEEK), Polyethersulfon (PES), Polyetherimid (PEI), Polyphenylensulfid (PPS) und Polysulfon (PSU) ist, wobei die Verstärkungsfasern ausgewählt sind aus der Gruppe Glasfasern, Karbonfasern, organische Fasern oder Keramikfasern.

4. Verfahren nach einem der Ansprüche 2 oder 3,
**dadurch gekennzeichnet, dass**
das geschlossenes Hohlprofil (3) aus dem faserverstärktem Kunststoff in einer Spritzgießmaschine (18) mit der Matrix (2) aus dem thermoplastischen Kunststoff zu dem Träger (1) mit der integrierten Luftführung (4) umspritzt wird, und die Spritzgießmaschine (18) mit einer Gasinnendruck-Technik (20) kombiniert ist, wobei mit Hilfe der Gasinnendruck-Technik (20) während des Umspritzens des geschlossenen Hohlprofils (3) im Innern des Profils (3) ein dem im Spritzgießwerkzeug (19) herrschenden Innendruck entgegengesetzter Druck erzeugt wird.

## Claims

1. Method for producing a carrier (1) of an interior trim component of a motor vehicle, in particular for an instrument panel, having a matrix (2) made from a thermoplastic plastic, wherein a hollow profile (3) having a closed cross-section made from a fibre-reinforced plastic is embedded into the matrix (2) made from the thermoplastic plastic, wherein the carrier (1) consists of a thermoplastic plastic from the group polypropylene (PP), polyethylene (PE), polybutylene terephthalate (PBT), polyamide (PA), polystyrene (PS), polycarbonate (PC), polymethyl methacrylate (PMMA), acrylonitrile butadiene styrene (ABS), acrylonitrile butadiene styrene / polycarbonate copolymer (ABS-PC) or polyoxymethylene (POM), with which the closed hollow profile (3) made from the fibre-reinforced plastic is insert moulded, **characterised in that**
the closed hollow profile (3) used for the carrier, made from the fibre-reinforced plastic, is produced via the steps
- extruding unidirectional fibre bands (10),
- processing the fibre bands (10) in a combined winding and heating tool (11) to form a tubular semi-finished product (16) and
- forming the tubular semi-finished product (16) to form the closed hollow profile (3).

2. Method according to claim 1,
**characterised in that**
the hollow profile (3) is provided as an air routing (4).

3. Method according to claim 1 or 2,
**characterised in that**
the fibre-reinforced plastic for the closed hollow profile (3) is a thermoplastic plastic selected from the group polypropylene (PP), polyamide (PA), polyetheretherketone (PEEK), polyethersulfone (PES), polyetherimide (PEI), polyphenylene sulphide (PPS) and polysulfone (PSU), wherein the reinforcing fibres are selected from the group glass fibres, carbon fibres, organic fibres or ceramic fibres.

4. Method according to one of claims 2 or 3,
**characterised in that**
the closed hollow profile (3) made from the fibre-reinforced plastic is insert moulded in an injection moulding machine (18) with the matrix (2) made from the thermoplastic plastic to form the carrier (1) having the integrated air routing (4), and the injection moulding machine (18) is combined with a gas internal pressure technology (20), wherein, with the aid of the gas internal pressure technology (20), during the insert moulding of the closed hollow profile (3) in the interior of the profile (3), an internal pressure of opposing pressure prevailing in the injection moulding tool (19) is generated.

## Revendications

1. Procédé de fabrication d'un support (1) d'un composant d'habillage intérieur de véhicule automobile, notamment pour le tableau de bord, comportant une matrice (2) en une matière thermoplastique, un profilé creux (3) à section fermée formé d'une matière plastique renforcée par des fibres étant intégré dans la matrice (2) en matière thermoplastique, le support (1) étant en une matière thermoplastique choisie dans le groupe suivant : polypropylène (PP), polyéthylène (PE), polybuthylène-téréphtalate (PBT), polyamide (PA), polystyrène (PS), polycarbonate (PC), polyméthacrylate de méthyle (PMMA), acrylonytryle-butadiène-styrène (ABS),copolymérisat acrylonitril-butadiène-styrène / polycarbonate (ABS-PC) ou polyoxyméthylène (POM), pour surmouler par injection le profilé creux (3), fermé réalisé en une matière plastique renforcée par des fibres,
procédé **caractérisé en ce que**
le profilé creux (3), fermé utilisé comme support, est fabriqué en une matière plastique renforcée par des fibres selon les étapes suivantes :
- extrusion de rubans de fibres unidirectionnelles (10),
- traitement des rubans de fibres (10) dans un outil combiné de bobinage et de chauffage (11) pour former un produit tubulaire semi-fini (16), et
- transformer le produit tubulaire semi-fini (16) pour obtenir un profilé creux fermé (3).

2. Procédé selon la revendication 1,
**caractérisé en ce que**
le profilé creux (3) est prévu comme conduite d'air (4).

3. Procédé selon la revendication 1 ou 2,
**caractérisé en ce que**
la matière plastique renforcée par des fibres pour le profilé creux fermé (3) est une matière thermoplastique choisie dans le groupe comprenant :
polypropylène (PP), polyamide (PA), polyéther-éther-cétone (PEEK), polyéther-sulfone (PES), polyéthylénimine (PEI), polysulfure de phényle (PPS) et polysulfone (PSU),
les fibres de renforcement étant choisies dans le groupe suivant : fibres de verre, fibres de carbone, fibres organiques ou fibres de céramique.

4. Procédé selon l'une des revendications 2 ou 3,
**caractérisé en ce que**
le profilé creux fermé (3) en matière plastique renforcée par des fibres est surmoulé par injection dans une machine d'injection (18) avec une matrice (2) de matière thermoplastique pour le support (1) avec guidage d'air intégré (4) et la machine d'injection (18) est combinée à une technique de pression interne de gaz (20), et à l'aide de cette technique de pression de gaz interne (20), pendant le surmoulage du profilé creux fermé (3), on génère à l'intérieur du profilé (3) une pression intérieure générant une poussée opposée à celle de l'outil de surmoulage (19).
